# EUROPEAN PATENT APPLICATION

(11) **EP 1 689 094 A2**
(43) Date of publication of application: **09.08.2006**
(21) Application number: 06001435.4
(22) Date of filing: 24.01.2006
(51) Int. Cl.: H04B 7/005

(54) **Wireless communication method and system for differentially controlling power according to distance**

(30) Priority: 07.02.2005 KR 2005011367
(71) Applicant: Samsung Electronics Co., Ltd., Suwon-si, Gyeonggi-Do (KR)
(72) Inventor: Cho, Dae-woo, Seoul (KR)
(74) Representative: Grünecker, Kinkeldey, Stockmair & Schwanhäusser Anwaltssozietät

(57) **Abstract**

A wireless communication method for differentially controlling power according to a distance, includes: generating a packet for measuring a distance between the access point and the client; transmitting the packet to measure the distance; receiving a response of the client for the packet transmitted; and transmitting data to the client in the quantity of power that the client can receive according to the received response of the client.

## Description

### BACKGROUND OF THE INVENTION

### 1. Field of the Invention

Methods and systems consistent with the present invention relate to wireless communication including differentially controlling power according to distance.

### 2. Description of the Related Art:

A wireless communication system presented by this invention is a communication system having an access point and at least one client. Here, the access point is a device constructing a wireless local area network (LAN), which connects a wired LAN and a wireless LAN. The access point is generally an independent device which can be used by inserting it into an Ethernet hub or a server. Since the access point is handed off from one access point to another according to a user position, in a manner similar to cellular phone technology, a user can use a mobile radio device while the user is moving. The user terminal or computer is connected to a network by the access point using a dedicated line or a telephone line, and the access point is comprised of a time divisional multiplexer (TDM) and a data circuit terminal equipment (DCE). Conventionally, as the user is positioned closer to the access point, a charge for circuit usage becomes lower, so that a communication fare can be saved.

Table 1 shows a comparison of wireless network technologies.

**Table 1**

| | | | | | | |
|---|---|---|---|---|---|---|
| Technology and standard | 802.11a | 802.11b | 802.11g | 802.15.1 Bluetooth | 802.15.3a UWB | 802.15.4 Zigbee |
| Frequency band | 5 GHz | 2.4 GHz | 2.4 GHz | 2.4 GHz | 5.1-10.6 GHz | 2.4 GHz |
| Transmission rate | 54 Mbps | 11 Mbps | 54 Mbps | 1-10 Mbps | 100-500 Mbps | 20-250 Mbps |
| Transmission distance | Several tens of meters | More than 100 meters | Several hundreds of meters | 10 meters | 20 meters | 10-100 meters |

In the case of IEEE 802.11a wireless communications, the frequency band is 5 GHz, the transmission speed is 54 Mbps, the transmission rate is 11 Mbps, and the transmission distance is more than 100m. Further, in the case of IEEE.802.11g wireless communications, the frequency band is 2.4 GHz, the transmission rate is 54 Mbps, and the transmission distance is several tens of meters.

Further, in the case of Bluetooth (IEEE 802.15.1) communications, the frequency band is 2.4 GHz, the transmission rate is 1-10 Mbps, and the transmission distance is about 10 meters. Further, in the case of the ultra wide band (UWB) (IEEE 802.15.3a) communications, the frequency band is 5.1-10.6 GHz, the transmission rate is 100-500 Mbps, and the transmission distance is about 20 meters. In the case of Zigbee (IEEE 802.15.4) communications, the frequency band is 2.4 GHz, the transmission rate is 20-250 Mbps, and the transmission distance is about 10-100 meters.

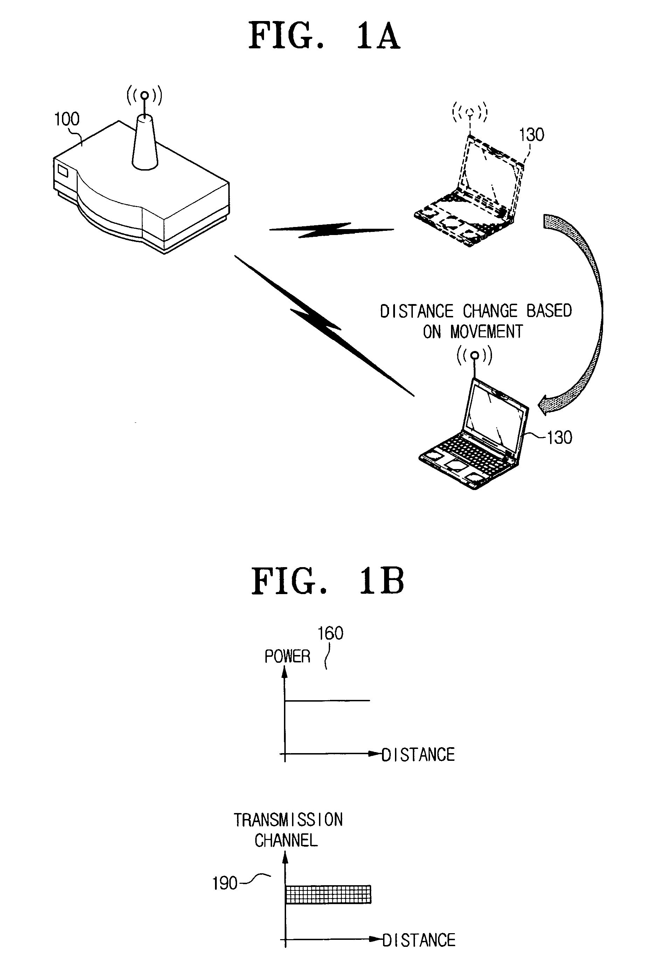

FIG. 1A is a schematic view showing a signal transmission between an access point and a client in a conventional wireless communication system. The wireless communication system shown in FIG. 1A includes an access point 100 and a client 130. The access point 100 transmits a signal to the client 130 with a predetermined output power and bandwidth.

FIG. 1B is a view showing an output and transmission channel characteristic between an access point and a client in a conventional wireless communication system. Referring to FIG. 1B, the access point 100 and client 130 perform a communication with each other in the same output power 160 and same transmission bandwidth 190 even when the distance between the access point 100 and client 130 changes as the client 130 moves in a wireless communication system. That is, a fixed magnitude of output power 160 is used at all times without reflecting the distance change between the access point 100 and the client 130 on the communication situation. If the same magnitude of output power is used even when the distance between the access point 100 and the client 130 is reduced, it leads to inefficiencies in using energy of the client 130 and in using a radio wave.

### SUMMARY OF THE INVENTION

The present invention provides a wireless communication method and system for differentially controlling power according to distance and a method for measuring a distance between an access point and a client.

According to an aspect of the present invention, there is provided a wireless communication method for differentially controlling power according to a distance, the method comprising: a) generating a packet for measuring a distance having information for transmission power in order to measure a distance between the access point and the client; b) transmitting the packet to measure the distance in the power corresponding to transmission power information included in the packet; c) receiving a response of the client for the packet transmitted; and d) transmitting data to the client in the quantity of power that the client can receive according to the received response of the client.

The method of the present invention may further comprise confirming whether all packets having the information corresponding to the transmission power are transmitted with transmission power in a power unit setup previously, and repeating the method a) to d) after a predetermined time when all the packets are transmitted. Further, d) may comprise determining the quantity of minimum power that the client can receive from the power information of the packet received by the client through the first response for the first time. Further, d) may further comprise allowing the access point to instruct the client a setup command for an operation in the bandwidth determined previously according to the quantity of the power. Further, d) may further comprise determining a transmission bandwidth corresponding to the quantity of power through the transmission band reference diagram that defines the transmission band based on the quantity of power.

Furthermore, d) may further comprise transmitting data to the client after setting the frequency of the transmission bandwidth. Further, d) may further comprise controlling the transmission bandwidth of the client through a media access control layer of the client.

According to an aspect of the present invention, there is provided a wireless communication system for differentially controlling power according to a distance, wherein the system comprises an access point and a client, the access point transmitting a packet for measuring the distance having information for the transmission power in power corresponding to the transmission power information included in the packet in order to measure a distance between the access point and the client, the access point receiving a response of the client and transmitting the data to the client in the quantity of power that the client can receive. Further, there may be a plurality of clients using the wireless communication system.

According to another aspect of the present invention, there is provided a wireless communication method for differentially controlling power according to a distance, the method comprising allowing an access point to generate a packet corresponding a plurality of transmission power determined in a predetermined interval and to transmit the packet in the transmission power corresponding the packet, and calculating a distance between the access point and the client from information for the packet received from the client for the first time.

The transmitting the packet in the transmission power may comprise setting up a list of each transmission power. Setting up the list of each transmission power may further comprise dividing the maximum power defined in the radio transmission standard by the requested number of the transmission bandwidth and determining the quantity of each transmission power. Further, the predetermined interval may be approximately 5 mW.

### BRIEF DESCRIPTION OF THE DRAWINGS

The above and/or other aspects of the invention will be more apparent by describing exemplary embodiments with reference to the accompanying drawings in which like reference numerals refer to like elements, and wherein:

FIG. 1A is a schematic view showing a signal transmission between an access point and a client in a conventional wireless communication system;

FIG. 1B is a view showing an output and transmission channel characteristic between an access point and a client in a conventional wireless communication system;

FIG. 2A is a schematic view showing a wireless communication system for differentially controlling power according to distance in accordance with an exemplary embodiment of the present invention;

FIG. 2B is a view showing output and transmission characteristics of a wireless communication system for differentially controlling power according to a distance in accordance with an exemplary embodiment of the present invention;

FIG. 3 is a conceptual view showing a method for measuring a distance between an access point and a client in accordance with an exemplary embodiment of the present invention;

FIG. 4A is a flow chart showing a packet transmission in accordance with an exemplary embodiment of the present invention;

FIG. 4B is a flow chart showing a power and transmission bandwidth control in accordance with an exemplary embodiment of the present invention;

FIGS. 5A and 5B are views illustrating a transmission band reference diagram in the case of IEEE 802.11b communications;

FIG. 6A is a view showing an exemplary embodiment of the present invention under a single client environment; and

FIG. 6B is a view illustrating an exemplary embodiment of the present invention under a multiple client environment.

### DETAILED DESCRIPTION OF THE EXEMPLARY EMBODIMENTS

With reference to the appended drawings hereunder, exemplary embodiments of the present invention will be described in detail.

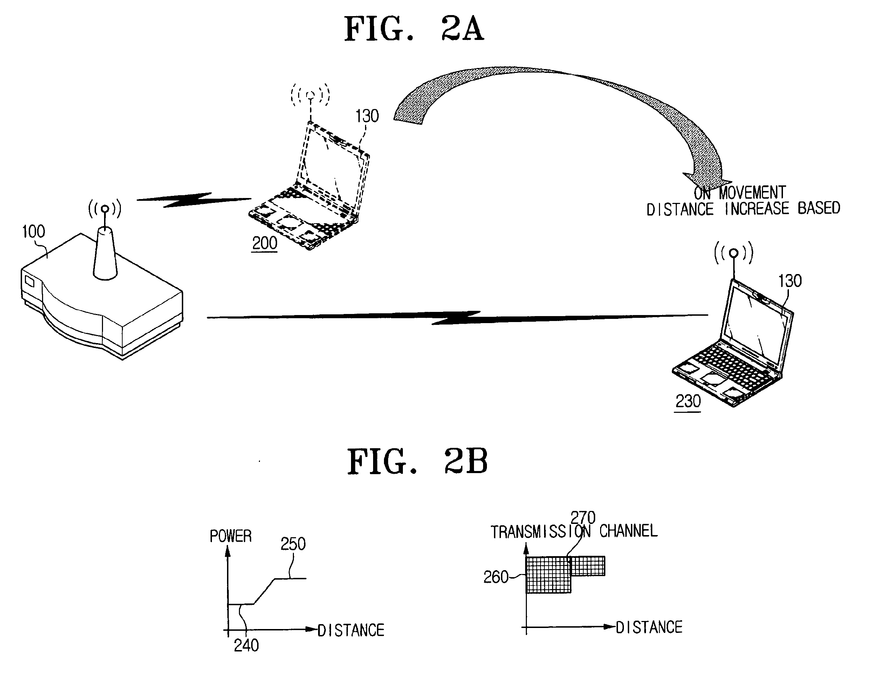

FIG. 2A is a schematic view showing a wireless communication system for differentially controlling power according to distance in accordance with the present invention. The wireless communication system shown in FIG. 2A includes an access point 100 and a client 130.

FIG. 2B is a view showing output and transmission characteristics of a wireless communication system for differentially controlling power according to a distance in accordance with the present invention. As the client 130 moves from a first position 200 to a second position 230, the power changes from a first value 240 to a second value 250, and the transmission bandwidth changes from a first bandwidth 260 to a second bandwidth 270. In order to control the power and transmission bandwidth of the access point 100 based on position movement of the client 130 shown in FIG. 2A, it should be assumed that a distance between the access point 100 and the client 130 is measured.

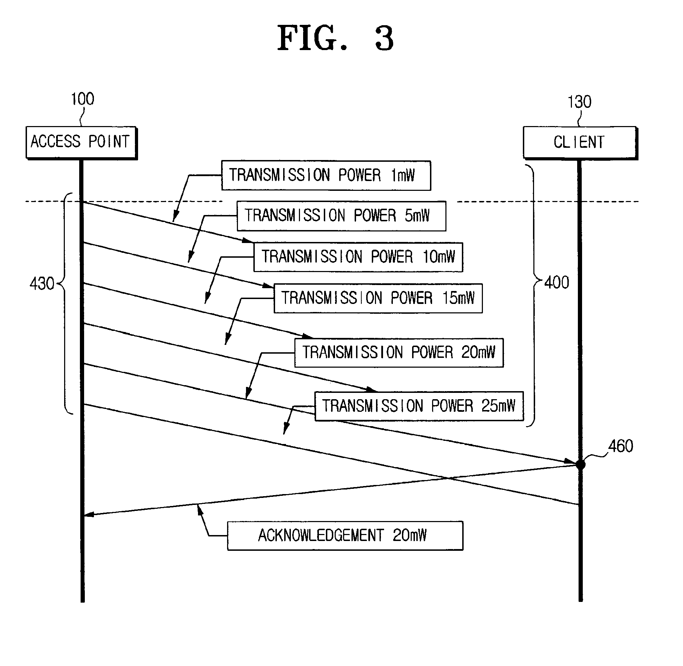

FIG. 3 is a conceptual view showing a method for measuring a distance between an access point and a client in accordance with the present invention. The method for measuring a distance between the access point 100 and the client 130 will be described with reference to FIG. 3. First, the access point 100 sets up a transmission power list 400. The transmission power list 400 is made by dividing the maximum power defined by a wireless transmission requirement by a number by which the transmission bandwidth is required to be divided. Next, the access point 100 generates a packet 430 corresponding to the quantity of each transmission power, and repeatedly transmits the packet at each divided transmission power.

For example, when the packet is transmitted through the quantity of power in an interval of 5 mW, the access point 100 transmits the packet corresponding to the quantity of each transmission power in the quantity of power of 5 mW, 10 mW, 15 mW, 20 mW and 25 mW. Here, as the transmission power increases, the distance to which the packet can reach also increases. As a result, when the packet 460 is the first packet, among the packets transmitted with increasing transmission powers, received by the client 130, which is located a predetermined distance from the access point 100, the client 130 acknowledges receipt of the packet 460 by sending a response message to the access point 100.

Assuming that the distance at which a packet arrives with a transmission power of 1 mW is 4 m and the response message received in the access point 100 is transmitted in response to the packet 460 transmitted at 20 mW, it can be recognized that the distance between the access point 10 and the client 130 is about 60- 80 meters. Thus, it is possible to determine the determine the distance of a client based on the transmission power of the packet which is first acknowledged as being received by the client.

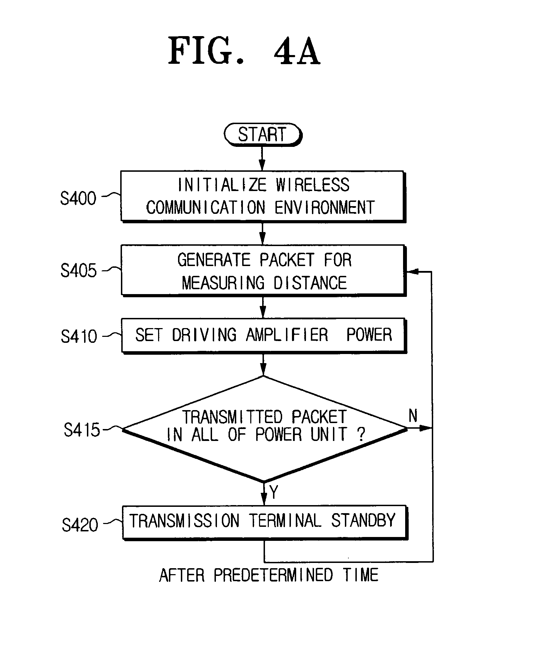

FIG. 4A is a flow chart showing a packet transmission in accordance with the present invention, and FIG. 4B is a flow chart showing a power and transmission bandwidth control in accordance with the present invention. An operational principle of a wireless communication scheme to differentially control power according to a distance in accordance with the present invention will be described with reference to FIGS. 4A and 4B. First, when an initial setup of a wireless communication environment of a wireless communication system in accordance with the present invention is completed (S400), the access point 100 generates a packet for measuring a distance (S405).

Next, the access point 100 sets a power of a driving amplifier (S410), and transmits the packet in a unit of power. The access point 100 confirms whether the packet is transmitted in all units of set power (S415), and again generates the packet for measuring distance (S405) when the packet has not been transmitted in all units of set power. When the packet was transmitted in all units of power, the transmission terminal of the access point 100 enters into the standby mode (S420). Next, when the time set up previously is elapsed, the access point 100 repeats operations 405 to 420 described above.

As such, it is possible to measure the distance between the access point 100 and the client 130 according to a predetermined time interval set up previously. Meanwhile, the receiving stage of the access point 100 waits for a response from the client 130 (S425). Next, the access point 100 confirms whether a response packet for the packet transmitted in the unit of power (S430).

When it is recognized that the response packet is received from the client 130, the access point 100 confirms the quantity of power that the client 130 of current position can receive from the response packet and then sets a driving amplifier (not shown) according to the quantity of power (S440). Next, the access point 100 confirms the transmission bandwidth for the quantity of power through a transmission band reference diagram to be described below (S450). The access point 100 instructs the client 130 to set the transmission bandwidth after confirming the bandwidth (S460). Further, the access point 100 sets the transmission bandwidth of the transmission bandwidth (S470), and controls a media access control (MAC) layer to be matched to the corresponding bandwidth (S480). Next, the access point 100 starts to transmit the data to the client 130 using the set transmission power and frequency of the bandwidth (S490).

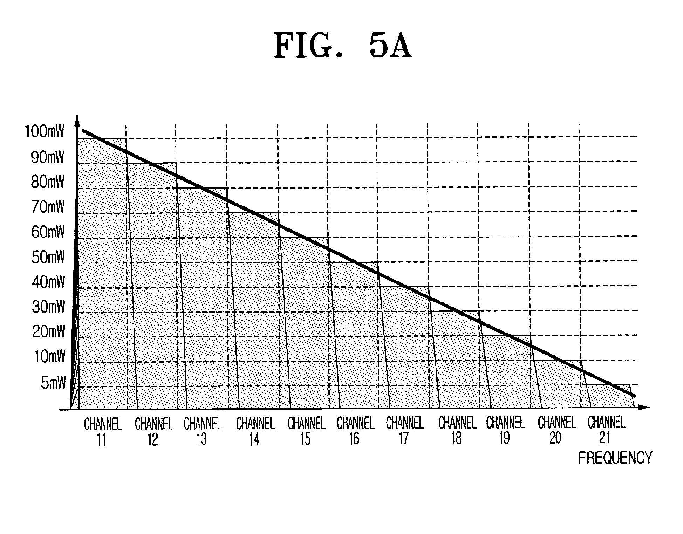

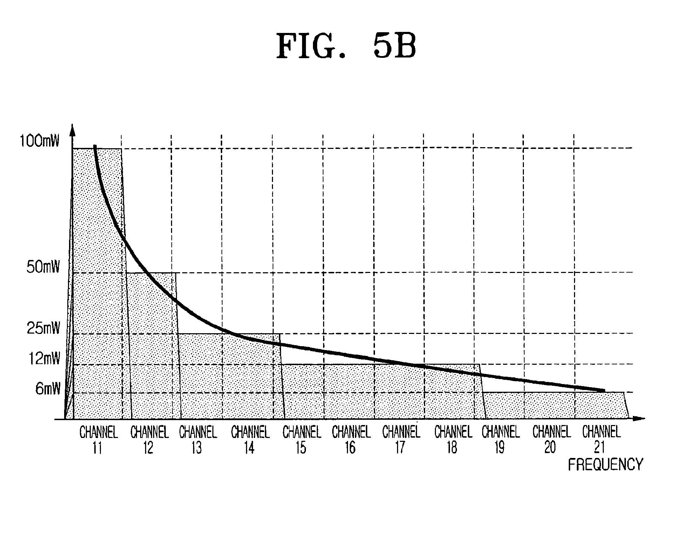

FIGS. 5A and 5B are views illustrating a transmission band reference diagram in the case of IEEE 802.11b communications. The transversal axis of abscissa in FIGS. 5A and 5B indicates the frequency based on the transmission channel, and the longitudinal axis indicates the transmission power. When the quantity of the transmission power is determined through the response packet from the client 130, the access point 100 determines the transmission bandwidth through the transmission band reference diagram setup previously, such as the transmission band reference diagram shown in FIGS. 5A and 5B.

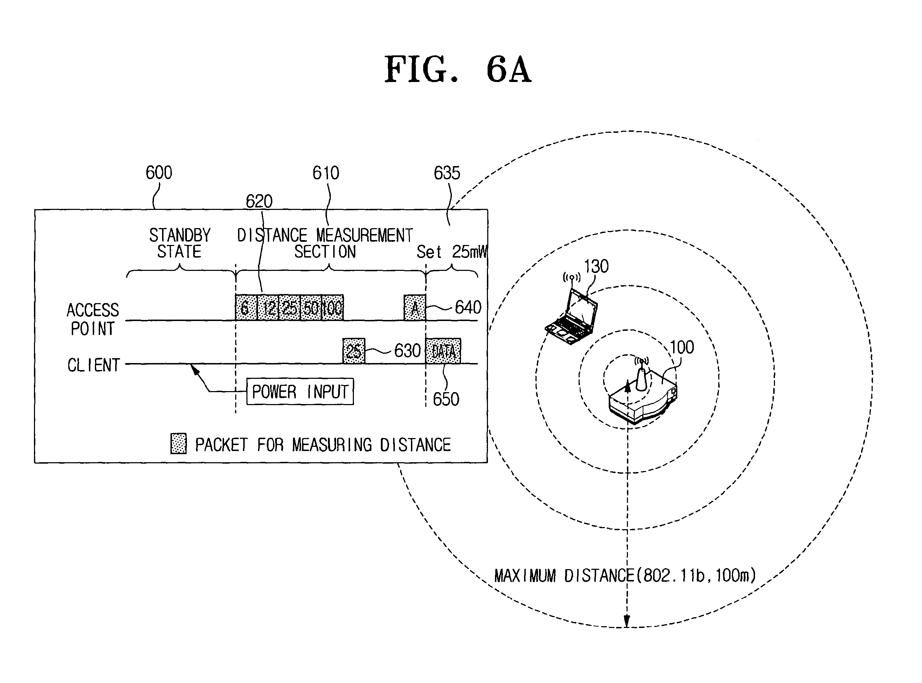

FIG. 6A is a view showing an exemplary embodiment of the present invention under a single client environment. Referring to FIG. 6A, the client 130 is positioned a predetermined distance from the access point 100. When the access point 100 changes from a standby state 600, to a distance measuring section 610, the access point 100 transmits each of packets 620 in a different transmission power such as 6 mW, 12 mW, 25 mW, 50 mW and 100 mW.

The client 130 responds by transmitting a packet 630 transmitted in the transmission power of 25 mW, and the access point 100 then transmits a packet 640 instructing the client 130 to setup the transmission bandwidth corresponding to 25 Mw. Subsequently, the access point 100 transmits data 650 to the client 130 in the transmission bandwidth corresponding to 25 Mw.

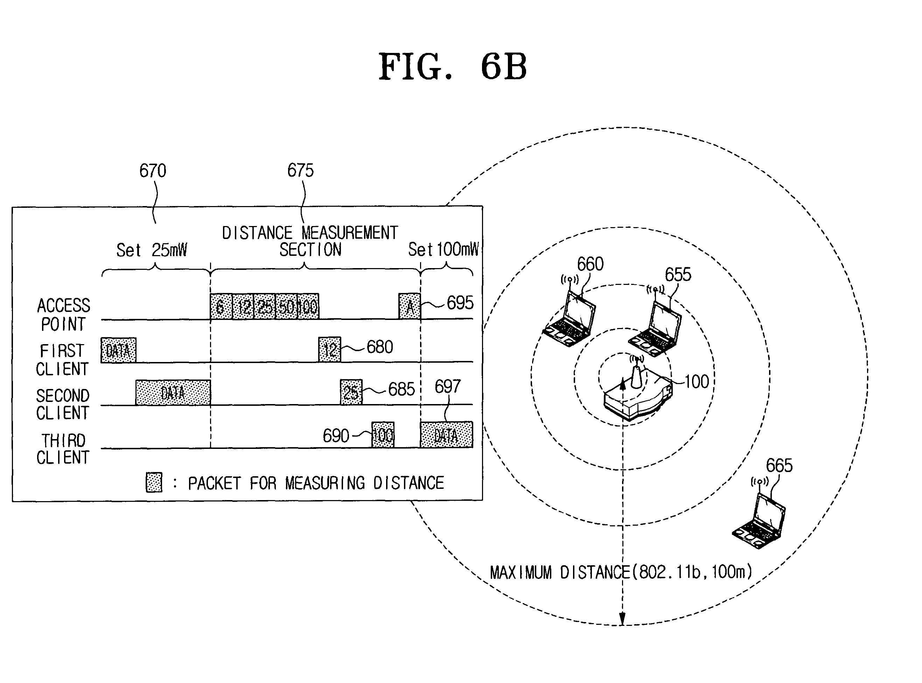

FIG. 6B is a view illustrating an exemplary embodiment of the present invention under a multiple client environment. Referring to FIG. 6B, a first client 655 is positioned a first predetermined distance from the access point 100 and a second client 660 is positioned a second predetermined distance from the access point 100. This is a case where a new third client 665 is positioned a third predetermined distance from the access point 100. Initially, the access point 100 sets up the transmission bandwidth corresponding to 25 mW and transmits data to the first client 655 and the second client 660. Subsequently, when the predetermined time is elapsed, the access point 100 transmits each packet in the transmission power of 6 mW, 12 mW, 25 mW, 50 mW and 100 mW setup at the distance measuring section 675 in order to measure the positions of the clients 655, 660 and 665.

The first client 655 responds by first transmitting a packet 680 in the transmission power of 12 mW , the second client 660 responds by first transmitting a packet 685 transmitted in the transmission power of 25 mW, and the third client 665 responds by first transmitting a packet 690 transmitted in the transmission power of 100 mW. The access point 100 instructs the first, second and third clients 655, 660 and 665 to setup the transmission bandwidth corresponding to the transmission power of 100 mW that enables the access point to optimally communicate with all the clients 665, 660 and 665 (695). After then, the access point 100 transmits the data 697 to the clients 655, 660 and 665 in the transmission bandwidth corresponding to the transmission power of 100 mW.

As described above, according to the present invention, the radio wave can be efficiently used by making an assignment of the transmission bandwidth depending on the distance change between the access point and the client. Further, according to the present invention, a high transmission rate can be guaranteed by making an assignment of a broader transmission bandwidth to the client located nearby.

Furthermore, an efficient energy consumption of the client can be exemplarily embodied by reducing the transmission power of the radio wave transmitted to the client located nearby.

Although the exemplary embodiments of the present invention has been described, it will be understood by those skilled in the art that the present invention should not be limited to the described exemplary embodiment, but various changes and modifications can be made within the spirit and scope of the present invention as defined by the appended claims.

## Claims

1. A wireless communication method for controlling transmission power, the method comprising:
transmitting a plurality of packets at different transmission powers;
receiving a response to one of the packets from a device ; and
transmitting data to the device at a transmission power that the device can receive according to the response.

2. The method according to claim 1, wherein the transmitting the plurality of packets comprises sequentially transmitting the packets at increasing preset power levels.

3. The method according to claim 1, wherein the response indicates a packet, among the plurality of packets, which is received first by the device, and the transmitting the data to the device comprises determining the transmission power that the device can receive as a transmission power of the packet which is received first by the device.

4. The method according to claim 1, further comprising instructing the device to set a transmission bandwidth which is determined according to the transmission power that the device can receive.

5. The method according to claim 1, wherein further comprising determining a transmission bandwidth corresponding to the transmission power that the device can receive.

6. The method according to claim 1, wherein the transmitting the plurality of packets comprises determining the different transmission powers based on bands of a transmission bandwidth.

7. The method according to claim 1, further comprising controlling a transmission bandwidth of the device through a media access control layer of the device.

8. The method according to claim 1, wherein the receiving the response to the packets comprises receiving a plurality of responses from a plurality of devices, and
the transmitting the data comprises transmitting the data to the devices at the power level that the all of devices can receive according to the responses.

9. The method according to claim 8, wherein the transmitting the plurality of packets comprises sequentially transmitting the packets at increasing preset power levels,
wherein the response from each of the devices indicates a packet, among the plurality of packets, which is received first by the corresponding device, and
wherein the transmitting the data to the devices comprises determining the transmission power that all of devices can receive as a highest transmission power of a packet, among the plurality of packets, which is received first by one of the devices.

10. A wireless communication system for controlling transmission power, the system comprising:
an access point which transmits a plurality of packets at different transmission powers; and
a device which receives at least one of the packets and transmits a response to the access point,
wherein the access point transmits data to the client at a transmission power that the device can receive according to the response.

11. The system according to claim 10, wherein the access point sequentially transmits the plurality of packets at increasing preset power levels.

12. The system according to claim 10, wherein the response indicates a packet among the plurality of packets which is received first by the device, and the access point determines the transmission power that the device can receive as a transmission power of the packet which is received first by the device.

13. The system according to claim 10, wherein the access point instructs the device to set a transmission bandwidth which is determined according to the transmission power that the device can receive.

14. The system according to claim 10, wherein further comprising determining a transmission bandwidth corresponding to the transmission power that the device can receive.

15. The system according to claim 10, wherein the access point determines the different transmission powers based on a transmission bandwidth.

16. The system according to claim 10, wherein the access point controls a transmission bandwidth of the device through a media access control layer of the device.

17. The system according to claim 10, further comprising a plurality of devices, wherein each of the devices transmits a response to the packets, and the access point the data transmits the data to the devices at the power level that the all of devices can receive according to the response from each device.

18. The system according to claim 17, wherein the access point sequentially transmits the packets at increasing preset power levels,
wherein the response from each of the devices indicates a packet, among the plurality of packets, which is received first by the corresponding device, and
wherein the access point determines the transmission power that all of devices can receive as a highest transmission power of a packet, among the plurality of packets, which is received first by one of the devices..

19. A wireless communication method for controlling power, the method comprising:
transmitting a plurality of packets at different power levels from an access point to a device;
receiving a response from the device, wherein the response indicates a packet, among the plurality packets, which is received first by the device; and
determining a distance between the access point and the device according to the response.

20. The method according to claim 19, wherein the determining the distance comprises calculating the distance based on a transmission power of the packet which is received first by the device.

21. The method according to claim 20, further comprising determining the transmission powers by dividing a maximum power defined in a radio transmission standard by a number of bands of a transmission bandwidth.

22. The method according to claim 21, wherein the transmission powers are increased in approximately 5mW intervals.
